# EUROPEAN PATENT APPLICATION

(11) **EP 4 400 633 A1**
(43) Date of publication of application: **17.07.2024**
(21) Application number: 22866530.3
(22) Date of filing: 05.09.2022
(51) Int. Cl.: C25B 11/032, C25B 9/23, C25B 1/04

(54) **GAS DIFFUSION LAYER AND PREPARATION METHOD THEREFOR**

(30) Priority: 09.09.2021 CN 202111056797
(71) Applicant: Qingke New Energy Technology (Shanghai) Co., Ltd., Hefei, Anhui 231131 (CN)
(72) Inventor: MAO, Xuewei, Hefei, Anhui 231131 (CN); LIN, Weibing, Hefei, Anhui 231131 (CN); TENG, Biao, Hefei, Anhui 231131 (CN)
(74) Representative: 2K Patentanwälte Blasberg Kewitz & Reichel
(86) International application number: PCT/CN2022/116942
(87) International publication number: WO 2023/036067

(57) **Abstract**

Disclosed are a porous transport layer and a preparation method therefor. The preparation method includes the following steps: S1, machining side-by-side elongated recesses on one side surface of a metal sheet; S2, cutting the metal sheet provided with the elongated recesses into a desired shape; S3, stacking a plurality of cut metal sheets such that adjacent metal sheets are tightly attached and firmly connected to form a metal block having regular pore structures inside; and S4, cutting the metal block along a cross section of the metal block, where the cutting thickness matches the thickness of the desired porous transport layer, and a cut sheet structure with micropores being regularly distributed on the surface is used as the porous transport layer. The present invention can solve the problems that titanium fiber felts in the prior art have poor diversion performance, low contact efficiency and large contact surface resistance.

## Description

### TECHNICAL FIELD

The present invention relates to the field of hydrogen production by water electrolysis, in particular to a porous transport layer and a preparation method therefor.

### BACKGROUND

Hydrogen production by electrolysis is considered as a new energy storage methods and one of the methods to consume renewable energy on a large scale, which has been unanimously recognized in the world. The methods of hydrogen production by electrolysis are mainly divided into the traditional method of hydrogen production by alkaline water electrolysis and the emerging method of hydrogen production by solid polymer electrolyte (SPE) water electrolysis. The hydrogen production by SPE water electrolysis has the advantages of high efficiency, miniaturization of devices, quick start and stop, no pollution and high purity of produced hydrogen, so hydrogen production by electrolysis is competitive in the new energy power generation scene with great fluctuation.

The main components of an SPE cell are a bipolar plate, a porous transport layer (anode and cathode), and a membrane electrode. The main functions of the porous transport layer are to support the membrane electrode, conduct electricity, guide the flow of gas and liquid, etc. Due to the strong oxidizing property of the anodic oxygen evolution reaction during the water electrolysis reaction, the porous transport layer and the bipolar plate of the SPE cell are mostly made of titanium. The existing porous transport layer for SPE cells mainly adopts a titanium fiber felt, and the titanium fiber felt has the following problems as the porous transport layer:
1, the titanium fiber felt is formed by lapping titanium fibers and then sintering, so that the internal voids are scrambled, and the fluid diversion effect is poor; and
2, the surface microstructure of the titanium fiber felt also exhibits a cluttered state, and at the interface making contact with the membrane electrode, the contact efficiency is not high, the contact surface resistance is large, and the efficiency of electrolytic water reaction is affected.

In order to solve the above problems, a new porous transport layer with a flat surface and regular pores is required to meet the requirements of contact efficiency and diversion efficiency.

### SUMMARY

The present invention provides a porous transport layer and a preparation method therefor, which can solve the problems of poor diversion effect, low contact efficiency, and large contact resistance of the existing titanium fiber felt.

In order to achieve the above object, in a first aspect, in an embodiment of the present application, the following technical solution is provided: a preparation method for a porous transport layer includes the following steps:
S 1, machining side-by-side elongated recesses on one side surface of a metal sheet;
S2, cutting the metal sheet provided with the elongated recesses formed in step S 1 into a desired shape;
S3, stacking a plurality of cut metal sheets in step S2 such that adjacent metal sheets are tightly attached and firmly connected to form a metal block having regular pore structures inside; and
S4, cutting the metal block in step S3 along a cross section of the metal block, where the cutting thickness matches the thickness of the desired porous transport layer, and a cut sheet structure with micropores being regularly distributed on the surface is used as the porous transport layer.

Preferably, step S1 includes the following steps:
S11, plate roll manufacturing: carving side-by-side grooves on a smooth-surfaced plate roll; and
S12, rolling the metal sheet using the plate roll manufactured in step S11 to machine side-by-side elongated recesses on one side surface of the metal sheet.

Preferably, the grooves on the plate roll are arranged side by side in the axial or circumferential direction of the plate roll.

Preferably, the elongated recesses on the surface of the metal sheet in step S1 are formed by laser machining or etching machining or ultrasonic electric carving machining or electrical discharge machining.

Preferably, the metal sheet is made of titanium or titanium alloy.

Preferably, the preparation method further includes performing surface coating treatment on the porous transport layer after step S4, wherein the surface coating treatment is passivation and anticorrosion treatment and hydrophilic treatment.

In a second aspect, in an embodiment of the present application, there is further provided a porous transport layer prepared by the preparation method described in the first aspect.

Compared with the prior art, the beneficial effects of the present invention are:
By adopting a brand-new preparation method, the preparation method has high efficiency, and a porous transport layer with a flat surface and regularly arranged diversion through holes can be prepared, so that the porous transport layer can more fully make contact with the membrane electrode, the contact surface resistance is reduced, and the electrolysis efficiency is improved; the diversion efficiency of gas and liquid can be improved to the maximum extent; therefore, the present application is an important innovation to the irregular internal pore structure of the porous transport layer used in SPE cells in the past, which can greatly improve the fluid diversion effect of the porous transport layer and improve the contact efficiency between the porous transport layer and the membrane electrode.

### BRIEF DESCRIPTION OF THE DRAWINGS

FIG. 1 is a flowchart of a preparation method of the present invention;
FIG. 2 is a schematic diagram of the stacking of metal sheets in step S3 in the preparation method of the present invention;
FIG. 3 is a schematic diagram of a metal block formed in step S3 in the preparation method of the present invention;
FIG. 4 is a structural schematic diagram of an embodiment of a porous transport layer according to the present invention; and
FIG. 5 is a structural schematic diagram of another embodiment of a porous transport layer according to the present invention.

### DETAILED DESCRIPTION

The technical solutions in the embodiments of the present invention will be clearly and completely described below in conjunction with the accompanying drawings in the embodiments of the present invention.

In order to achieve the above object, and solve the problem that the conventional titanium fiber felt is poor in diversion effect, low in contact efficiency, and large in contact resistance, the present invention provides the following technical solutions.

### Embodiment 1:

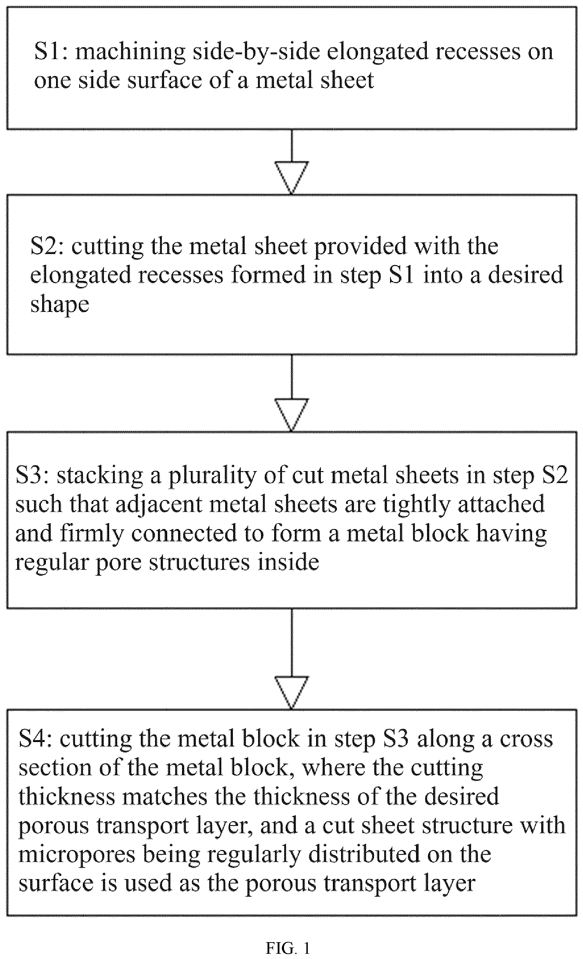

As shown in FIG. 1, a preparation method for a porous transport layer is provided and includes the following steps:
Step S1, machining side-by-side elongated recesses on one side surface of a metal sheet, wherein the elongated recesses are used to form micropores on the porous transport layer, an important indicator of the porous transport layer is porosity, which is the ratio of the area of the micropores to the area of the porous transport layer, and the size of the elongated recesses and the thickness of the metal sheet will both affect the porosity of the porous transport layer. Let the depth of the elongated recesses be a, the width of the elongated recesses be b, the distance between adjacent elongated recesses be c, and the total thickness of the metal sheet be d, by setting the ratio of these four parameters, a porous transport layer with a certain porosity can be obtained, such as a:b:c:d=1:1:1:2, the final porosity of the porous transport layer is 25%; the four parameters can also be set as a:b:c:d=1 :2:2:4, then the final porosity of the porous transport layer is 12.5%; further, the four parameters can be set as a:b:c:d=1: 1 :2:2, then the final porosity of the porous transport layer is 12.5%.

In this embodiment, the cross-sectional shape of the elongated recesses has a variety of options, preferably rectangular or square, or semi-circular or triangular or trapezoidal, etc., and those skilled in the art can select different shapes of the elongated recesses according to the specific use requirements of the porous transport layer.

In this embodiment, the present application provides a high-efficiency manner of forming the elongated recesses, which is specifically to carve side-by-side grooves on a smooth-surfaced plate roll, and then roll the metal sheet using the prepared plate roll to prepare side-by-side elongated recesses on one side surface of the metal sheet, wherein the grooves on the plate roll are used to form beams between the elongated recesses, and a large number of elongated recesses can be formed at one time by rolling the metal sheet by mounting the surface-carved plate roll on a press roll.

The grooves on the plate roll are arranged side by side in the axial or circumferential direction of the plate roll, and the formation of the elongated recesses can be accomplished by rolling.

Of course, there are many manners of forming the elongated recesses on the metal sheet during practical use, such as laser machining or etching machining or ultrasonic electric carving machining or electrical discharge machining, and those skilled in the art can select the forming manner according to their needs.

In this embodiment, the metal sheet is preferably made of titanium or titanium alloy, and those skilled in the art can also use other metal materials or alloy materials having good corrosion resistance.

Step S2, cutting the metal sheet provided with the elongated recesses formed in step S1 into a desired shape, such as a 200 mm×500 mm rectangular shape, wherein there are many cutting manners, such as die cutting by an edge cutter, or wire electrical discharge machining.

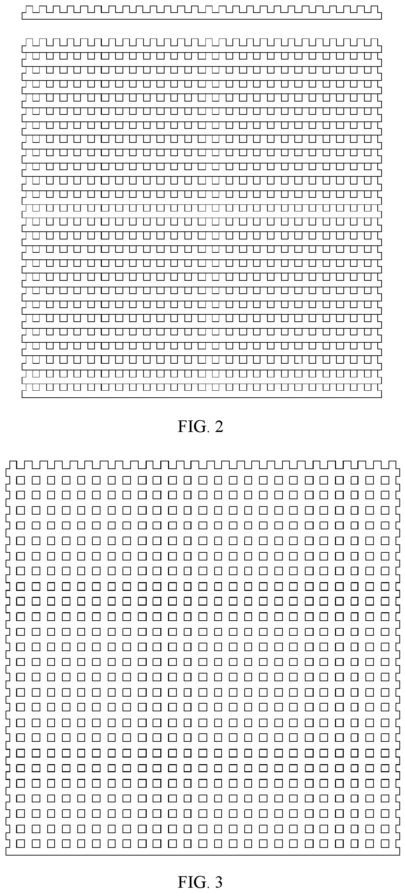

Step S3, as shown in FIGS. 2-3, stacking a plurality of cut metal sheets in step S2, wherein the number of stacked metal sheets can be adjusted according to the requirements of the porous transport layer, and adjacent metal sheets are tightly attached and firmly connected, specifically, beams formed by the elongated recesses on the lower metal sheet are tightly attached to the smooth back face of the upper metal sheet, and the metal sheets are firmly connected together by a high-temperature welding process to form a metal block having regular pore structures inside, such as a metal block having a size of 200 mm×500 mm×500 mm. Of course, other manners of connecting the metal sheets can be used in practice, such as ultrasonic welding, resistance welding and laser welding.

Step S4, cutting the metal block in step S3 along a cross section of the metal block, wherein the cutting thickness matches the thickness of the desired porous transport layer, for example, the thickness is 0.5mm, and a cut sheet structure with micropores being regularly distributed on the surface is used as the porous transport layer. When a metal block with the size of 200 mm×500 mm×500 mm is cut, hundreds of porous transport layers with specifications of 500 mm×500 mm×0.5 mm can be obtained, and the density of micropores of the formed porous transport layer can reach several millions to several billions per square meter, so that the fluid diversion effect is excellent.

After step S4, a step S5 can also be added, specifically, surface coating treatment is performed on the porous transport layer, wherein the surface coating treatment is mainly passivation and anticorrosion treatment and hydrophilic treatment.

### Embodiment 2:

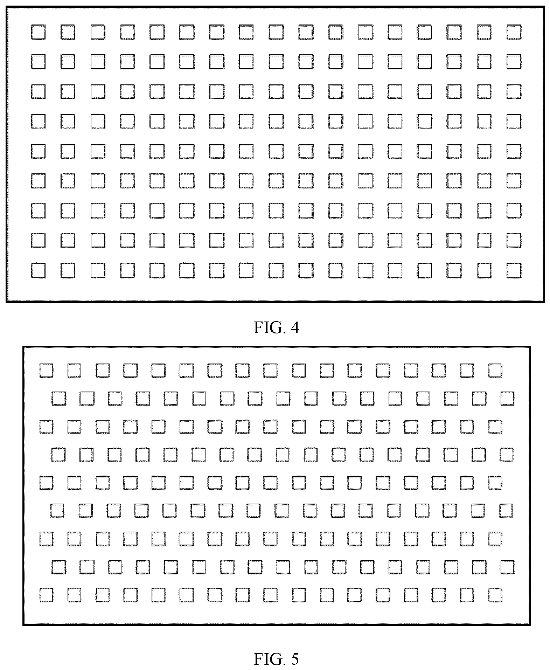

In an embodiment of the present application, the present application provides a porous transport layer, as shown in FIG. 4, the porous transport layer is prepared by the preparation method described in Embodiment 1, specifically, the porous transport layer structurally includes a sheet body, wherein a plurality of micropores running through the sheet body are regularly arranged on the sheet body, and the thickness of the sheet body is preferably in the range of 200 to 800 microns. The micropores can be arranged in a rectangular array as shown in FIG. 4. Alternatively, the micropores can be arranged in a plurality of rows with the micropores in adjacent rows being staggered as shown in FIG. 5, so that the micropores are more uniform, and the area utilization rate can be improved for the irregular sheet body.

According to the present application, by adopting a brand-new preparation method, the preparation method has high efficiency, and a porous transport layer with a flat surface and regularly arranged diversion through holes can be prepared, so that the porous transport layer can more fully make contact with the membrane electrode, the contact surface resistance is reduced, and the electrolysis efficiency is improved; the diversion efficiency of gas and liquid can be improved to the maximum extent; therefore, the present application is an important innovation to the irregular internal pore structure of the porous transport layer used in SPE cells in the past, which can greatly improve the fluid diversion effect of the porous transport layer and improve the contact efficiency between the porous transport layer and the membrane electrode.

In addition, it should be noted that the porous transport layer prepared by the method of the present application can also be used in the field of physicochemical reactions, including but not limited to fuel cells, where sufficient fluid dispersion or collection is required, and the performance advantages of the porous transport layer of the present application can also be reflected when used in these fields.

It should be noted that all directional indications (such as upper, lower, left, right, front, back, etc.) in the embodiment of the present invention are only used to explain the relative position relationship and movement situation among components in a certain posture (as shown in the drawings), and if the certain posture changes, the directional indications will also change accordingly.

In addition, in the present invention, descriptions such as "first" and "second" are only used for descriptive purposes, and cannot be understood as indicating or implying their relative importance or implicitly indicating the number of indicated technical features. Thus, features defined by "first" and "second" can explicitly or implicitly include at least one of such features. In the description of the present invention, "plurality of" means at least two, e.g., two, three, etc., unless expressly and specifically defined otherwise.

In the present invention, unless otherwise specified and limited, the terms "connection" and "fixation" should be broadly understood. For example, "fixation" can be fixed connection, detachable connection or integrated connection, can be mechanical connection or electrical connection, and can be direct connection, can also be indirect connection through an intermediary, and can be the internal connection of two elements or the interaction between two elements, unless otherwise explicitly defined. The specific meaning of the above terms in the present invention can be understood by a person having ordinary skill in the art according to specific circumstances.

In addition, the technical solutions between the various embodiments of the present invention can be combined with each other, but it must be based on being able to be implemented by a person having ordinary skill in the art, when the combination of the technical solutions contradicts each other or cannot be implemented, it should be considered that the combination of the technical solutions does not exist and is not within the scope of protection claimed in the present invention.

## Claims

1. A preparation method for a porous transport layer, **characterized by** comprising the following steps:
S1, machining side-by-side elongated recesses on one side surface of a metal sheet;
S2, cutting the metal sheet provided with the elongated recesses formed in step S1 into a desired shape;
S3, stacking a plurality of cut metal sheets in step S2 such that adjacent metal sheets are tightly attached and firmly connected to form a metal block having regular pore structures inside; and
S4, cutting the metal block in step S3 along a cross section of the metal block, where a cutting thickness matches a thickness of a desired porous transport layer, and a cut sheet structure with micropores being regularly distributed on a surface is used as the porous transport layer.

2. The preparation method for a porous transport layer according to claim 1, **characterized in that**:
step S1 comprises the following steps:
S11, plate roll manufacturing: carving side-by-side grooves on a smooth-surfaced plate roll; and
S12, rolling the metal sheet using the plate roll manufactured in step S11 to machine side-by-side elongated recesses on one side surface of the metal sheet.

3. The preparation method for a porous transport layer according to claim 2, **characterized in that** the grooves on the plate roll are arranged side by side in an axial or circumferential direction of the plate roll.

4. The preparation method for a porous transport layer according to claim 1, **characterized in that** the elongated recesses on the surface of the metal sheet in step S 1 are formed by laser machining or etching machining or ultrasonic electric carving machining or electrical discharge machining.

5. The preparation method for a porous transport layer according to claim 1, **characterized in that** the metal sheet is made of titanium or titanium alloy.

6. The preparation method for a porous transport layer according to claim 1, **characterized by** further comprising performing surface coating treatment on the porous transport layer after step S4, wherein the surface coating treatment is passivation and anticorrosion treatment and hydrophilic treatment.

7. A porous transport layer, **characterized by** being prepared by the preparation method according to any one of claims 1-6.
